# EUROPEAN PATENT APPLICATION

(11) **EP 4 115 780 A1**
(43) Date of publication of application: **11.01.2023**
(21) Application number: 21203863.2
(22) Date of filing: 21.10.2021
(51) Int. Cl.: A47J 45/07

(54) **A DETACHABLE HANDLE WITH A ROTATABLE ACTUATOR**

(30) Priority: 05.07.2021 CN 202121513599 U; 25.08.2021 CN 202122020682 U
(71) Applicant: FEM Industries Co., Ltd., XinZhuang 215555 ChangShu JiangSu (CN)
(72) Inventor: Lin, Rixie, ChangShu (CN); Li, Xueqiang, ChangShu (CN)
(74) Representative: Huang, Liwei

(57) **Abstract**

The present invention provides a detachable handle with a rotatable actuator, including: a main body, a rotatable actuator is provided on the main body of the handle, and a rotating subassembly is located above the clamping rake or on the clamping rake, and the rotating subassembly is connected with the rotary actuator; a disk is provided on the clamping rake, and a movement of the disk is linked with a movement of the rotating subassembly; under a rotation of the rotatable actuator, a movement of the disk in a longitudinal direction is achieved, so as to bring the detachable handle into a closed state or into a opened state. The handle has a wide range of applications. It is simple in structure, and is easy in use and in storage.

## Description

### Technical field

The present invention relates to the technical field of daily necessities, particularly involving a detachable hand with a rotatable actuator.

### Background art

A pan is a cookware frequently used in daily life. The pans in prior art may be divided into two types. One type is a pan with a handle, wherein the handle and the cook body are fixed together. It has a very stable structure but brings some troubles in storage, and cannot be used in an intelligent dishwashing equipment. The other type is a pan without handle, for which people usually need some thermal insulating pads when holding up the pans, in order not to burn their hands. It is therefore inconvenience in use, since there is a potential risk that the pan might fall over and cause scalding injuries.

In the prior art, some detachable handles are provided so that a user can easily install the handle onto a cooking container, or to separate the handle from the cooking container. There are generally two forms. Some detachable handles need to be used with a handle connector fixed on the pot, wherein the handle and the pot is connected through the handle connector. It is easy to operate, but requires a handle connector being fixed on the pot. Some detachable handles are designed to enlarge the scope of application by having a clamping part which can be used to clamp the outer wall of the pot.

### Contents of the invention

The present invention provides a detachable handle, including: a main body in which a passage is longitudinally arranged, and a clamping rake is arranged in the passage, and the clamping rake is able to move longitudinally; a rotatable actuator is provided on the main body of the handle, and a rotating subassembly is located above the clamping rake or on the clamping rake, and the rotating subassembly is connected with the rotary actuator; a disk is provided on the clamping rake, and a movement of the disk is linked with a movement of the rotating subassembly; under a rotation of the rotatable actuator, a movement of the disk in a longitudinal direction is achieved, so as to bring the detachable handle into a closed state or into a opened state.

Further, a bottom of the rotating subassembly has different radial lengths in two different directions.

Further, the rotating subassembly has a stepped shape; preferably, a bottom step of the rotating subassembly has an elliptical shape or an oval shape or an oval-like shape, having a long axis and a short axis; more preferably, a flat surface or a concave surface is provided at each of two ends of the long axis.

Further, the disk is mounted on the rake by a fastener; in a process of closing the handle, a rotation of the rotating subassembly pushes the disk to move backwards, thereby driving the rake to move backwards.

Further, the disk is a rotating wheel with an inner ring and an outer ring; the inner ring does not rotate and is used for installing the fastener so as to be fixed on the rake; the outer ring is driven to rotate by a contact of the rotating subassembly.

Further, a safety lock is provided, which uses a put-in locking structure to prevent the rake from moving forward, thereby preventing the handle from being opened.

Further, the safety lock comprises a locking bar mounted on the main body, and a locking groove is provided on the rake; when one end of the locking bar falls into the locking groove, the rake is prevented from moving forward; by flipping or pressing the other end of the locking bar, the locking bar is moved out of the locking groove, so as to open the safety lock and to release the rake.

Further, a lower surface of the rotatable actuator is provided with a positioning groove, a upper side of the main body of the handle is provided with a cavity for the rotatable actuator, and at least one positioning convex bulge is provided in the cavity for the rotatable actuator; when the rotatable actuator is being rotated, the positioning convex bulge moves in the positioning groove.

Further, a lower surface of the rotatable actuator is provided with a spring groove, an upper side of the main body of the handle is also provided with a corresponding spring groove, and a spring is placed in the spring groove, wherein the spring provides an elastic force for the rotatable actuator.

Further, a left end of the clamping rake and a left end of the main body of the handle are both designed to be recessed, so as to stably contact an inner wall or an outer wall of a pot.

The detachable handle of the present invention has following technical advantages.
1. The clamping rake is designed to slide in the longitudinal direction, so as to have a wide range of applications in different pots in the market, for example, it is suitable for pots of different thicknesses, pots with or without wall edges or with different sizes of edges.
2. We provide a special design with the rotatable actuator, the rotating subassembly and the disk. Rotating the rotatable actuator can drive the rotating subassembly to rotate, and relying on the linkage relationship between the rotating subassembly and the disk, the longitudinal movement of the clamping rake is achieved.
3. By using a safety lock, the closed state can be tighter and stabler. Even when lifting a heavy pot or with heavy food, it is not easy to fall over. Moreover, the safety lock of the put-in locking structure is simple in structure and is easy in operation.
4. The handle has a simple structure, and the rotatable actuator for opening and closing the handle is located above the handle body, which is convenient in operation and is easy in use and in storage.

### Brief description of the drawings

Figure 1 is a perspective view of the first embodiment of the present invention.
Figure 2 is an exploded view of the first embodiment of the present invention.
Figure 3 is a side cross-sectional view of the first embodiment of the present invention.
Figure 4 is a disassembled view of the rotating part of the first embodiment of the present invention.
Figure 5 is a top view showing the rotating subassembly of the first embodiment of the present invention.
Figure 6 is a disassembled view showing the rotatable actuator of the first embodiment of the present invention.
Figure 7 is a closed state of the second embodiment of the present invention.
Figure 8 is a fully-opened state of the second embodiment of the present invention.
Figure 9 is an exploded view of the second embodiment of the present invention.
Figure 10 is a schematic diagram of the internal structure of the second embodiment in the closed state.
Figure 11 is a schematic diagram of the safety lock locking the rake in the second embodiment of the present invention.
Figure 12 is a schematic diagram of the internal structure of the second embodiment in the fully-opened state.
Fig. 13 is a schematic diagram of the structure in the rotatable actuator in the second embodiment of the present invention.

### Embodiments of the invention

Here are preferred embodiments of present invention described with reference to the drawings, so that it is easier for the skilled person to understand the advantages and characteristics of present invention.

In the description, it needs to be understood that the terms which indicate an orientation or a positional relationship, such as "upper", "lower", "left", "right", "front", "rear", "horizontal", "vertical", "in", "out", etc. are normally based on the orientation or the positional relationship shown in the drawings, which are only for the convenience of describing the present invention, and are not used to express or imply that the component or the element referred to must have such a specific orientation. Therefore, these terms should not be understood as a specific limitation to the present invention.

### Embodiment 1

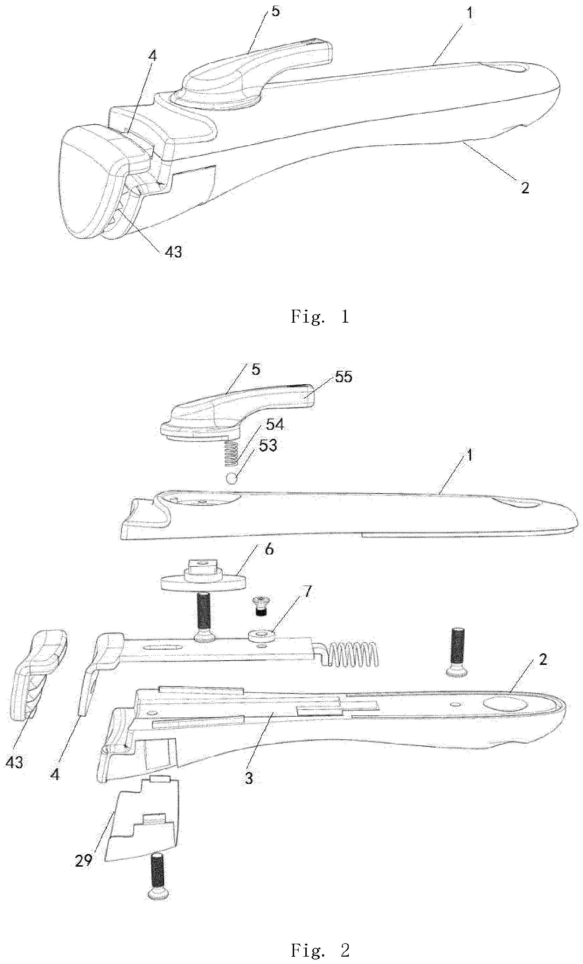

As shown in Figures 1 to 6, a detachable handle with a rotatable actuator is provided.

It includes an upper body 1 and a lower body 2 that are connected in a fixed manner (i.e. with fastener(s)). A clamping rake 4 is located between the upper body 1 and the lower body 2, and the clamping rake 4 can slide between the upper body 1 and the lower body 2, and move in a longitudinal direction.

A rotatable actuator 5 is provided on the upper body 1 of the handle. Besides, a rotating subassembly 6 is located between the upper body 1 and the clamping rake 4, and the rotating subassembly 6 can rotates in cooperation with the rotary actuator 5. Meanwhile, a disk 7 is provided on the clamping rake 4, and the movement of the disk 7 is linked with the movement of the rotating subassembly 6. When the rotatable actuator 5 is being rotated, the rotating subassembly 6 rotates, and pushes the disk 7 to move in the longitudinal direction, so as to achieve a longitudinal movement of the rake 4. Thereby, the handle changes from an opened state into a closed state for holding a pot, or vice versa. In addition, a spring 42 is located on the rear side of the clamping rake 4. When the handle is in the closed state, the spring 42 is compressed.

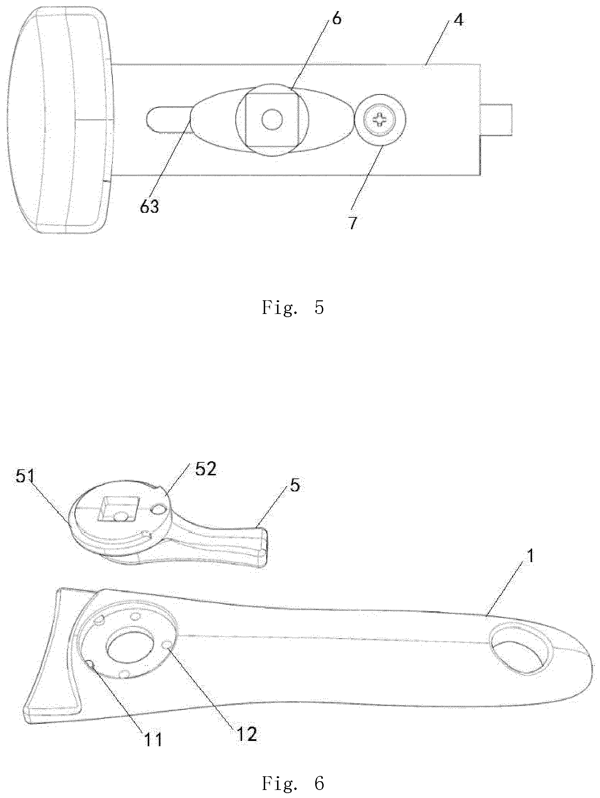

Regarding the rotation of the rotatable actuator: As shown in Fig. 6, the lower surface of the rotatable actuator 5 is provided with a positioning groove 51. Correspondingly, a cavity for the rotatable actuator is provided on the upper body 1 of the handle, and at least one positioning convex bulge 11 is arranged in the cavity for the rotatable actuator. When the rotatable actuator 5 is being rotated, the positioning convex bulge 11 moves in the positioning groove 51. For example, the rotatable actuator 5 may have a shape of a handle. For example, there may be one or two positioning convex bulges 11. For example, the handle of the rotatable actuator 5 can be clockwise or counterclockwise rotated for 90 degrees.

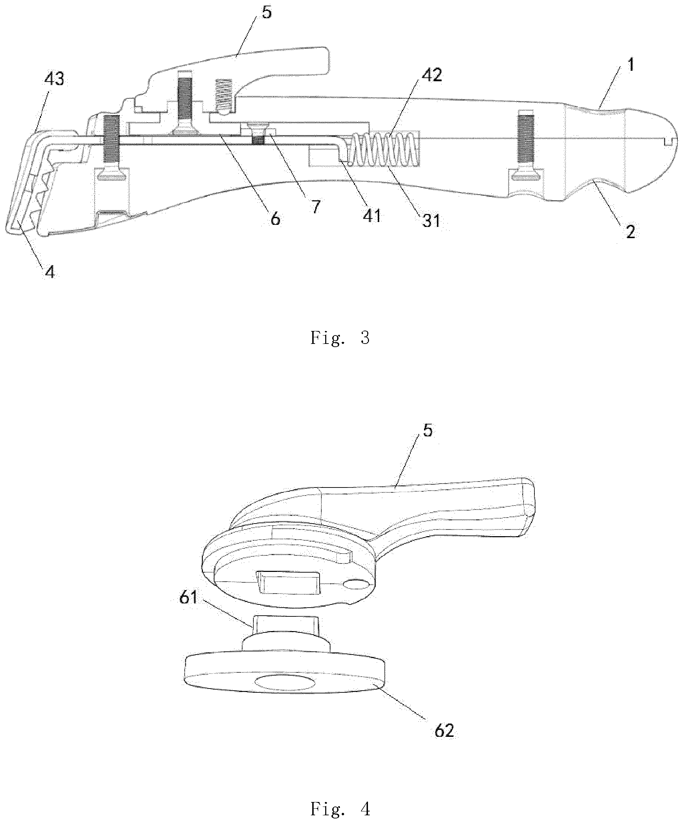

Regarding the rotation of the rotating subassembly: As shown in Figure 4, the rotating subassembly 6 has a stepped shape. The top step 61 of the rotating subassembly 6 is preferably square in shape and it is embedded in the rotatable actuator 5. Correspondingly, the lower part of the rotatable actuator 5 has a square cavity to accommodate the top step 61 of the rotating subassembly 6. The bottom step 62 of the rotating assembly 6 has two different radial lengths in two different directions. For example, it has two different radial lengths in two perpendicular directions, namely, it is long in one direction and is short in another direction. The shape between the two different (such as perpendicular) directions is preferably an arc, that is, at least a part of the outer edge of the bottom step 62 is an arc. For example, the bottom step 62 may as a whole have an elliptical shape, an oval shape or an oval-like shape. That is to say, it is large in the middle and small at two ends. When the handle is in an opened state, the disk 7 is in contact with a part of the bottom step 62 which has a relatively short radial length (such as in the direction of a minor axis (a short axis) of the ellipse). Thereafter, under the rotation of the rotatable actuator 5, the disk 7 is pushed toward the right by the arc of the bottom step 62. This movement drives the entire clamping rake 4 to move toward the right, until the handle achieves a closed state of tightly clamping the pot.

Preferably, two ends of the bottom step 62 are each provided with a flat surface or a concave surface, which can prevent the disk 7 from slipping away. For example, a flat surface or a concave surface is provided at one or two ends having a relatively long radial length. For example, flat or concave end faces 63 are provided at two ends of the major axis of the ellipse.

In addition, more preferably, the radially longer part of the bottom step 62 (for example, the direction of the major axis (the long axis) of the ellipse) and the handle 55 of the rotatable actuator 5 are in the same direction or perpendicular to each other. For example, when the handle 55 is towards right in the longitudinal direction of the handle, the disk 7 is in contact with the radially longer part of the bottom step 62 (such as in the direction of the major axis of the ellipse), and the handle is in the closed state; when a user rotates the handle 55 clockwise or counterclockwise (such as to 90 degrees, or the user only needs to slightly rotate the handle 55 to break the balance and the handle will continue to be opened under an action of a spring force), the disk 7 slides to contact the radially shorter part of the bottom step 62 (such as in the direction of the minor axis of the ellipse), the handle enters the opened state.

Regarding the movement of the disk: The disk 7 is installed on the rake 4, such as by a fastener (such as a screw). During the rotation of the bottom step 62, the disk 7 may be pushed to move to the right, so as to drive the rake 4 to move to the right. In order to make the linkage between the rotating assembly 6 and the disk 7 smoother, the disk 7 can be a rotating wheel. When the rotating assembly 6 rotates, under the contact force of the rotating assembly 6, the outer circumference of the disk 7 can also rotate. For example, the disk 7 may have an inner ring and an outer ring. The inner ring does not rotate and is used for installing the fastener (such as a screw) as to be firmly fixed on the rake 4. The outer ring may rotate with the rotating assembly 6 as to reduce the friction that the rotating assembly 6 may encounter during its rotation.

Regarding the distance limitation of the rake: The lower body 2 of the handle is provided with a longitudinal passage 3, the clamping rake 4 is arranged in the passage 3, the right end of the clamping rake 4 is provided with a hook 41, and a groove 31 is provided at the right end of the passage 3. The position of the groove 31 and the hook 41 limits the maximum distance that the clamping rake 4 can extend outward (see FIG. 3).

Regarding the rotation positioning of the rotatable actuator: A cavity for a positioning ball is provided at a positioning step 52. A positioning ball 53 and a spring 54 for the ball (which restricts the position of the ball 53) are arranged in the cavity. In the cavity for the rotatable actuator, three positioning holes 12 are provided to position the positioning ball, so as to restrict the position of the rotatable actuator 5 in an opened state or in a closed state, etc. When the handle 55 of the rotatable actuator 5 is located along the longitudinal direction, the positioning ball 53 is embedded in a positioning hole 12 (see FIG. 6 and FIG. 3). When the rotatable actuator 5 is being rotated, the positioning ball 53 slides out of the positioning hole 12, and the spring 54 above the ball 53 is compressed.

### Embodiment 2

The structure of the second embodiment is similar to that of the first embodiment, expect that a positioning structure different from that of the first embodiment is used in the second embodiment, and a safety lock structure is provided in the second embodiment.

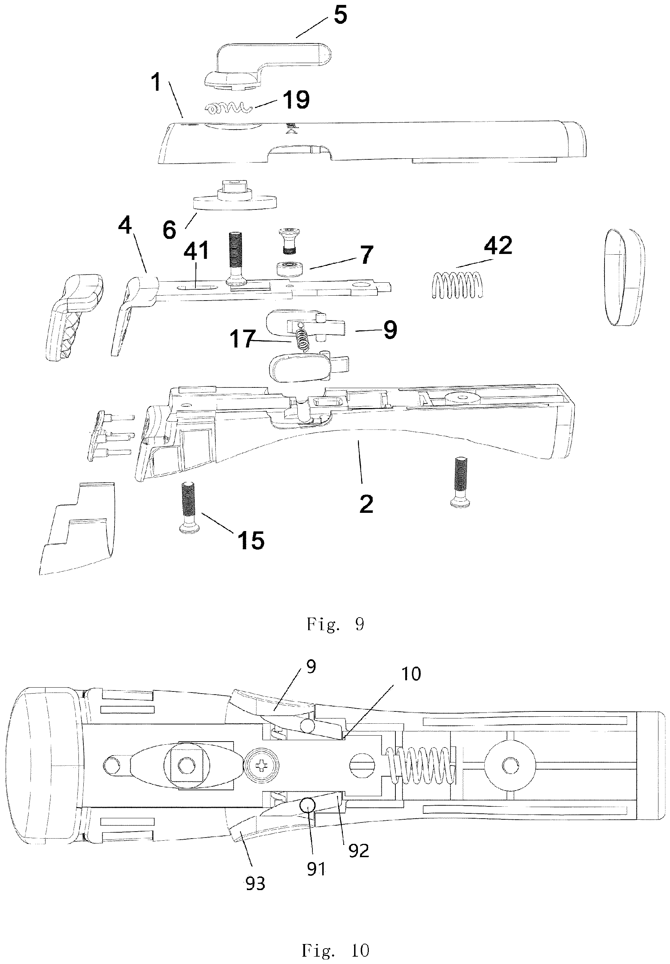

As shown in FIGS. 9 to 12, a positioning hole 41 may be provided on the left side of the rake 4. After installation, a screw 15 is placed in the positioning hole 41, thereby limiting the maximum distance that the clamping rake 4 can extend outward.

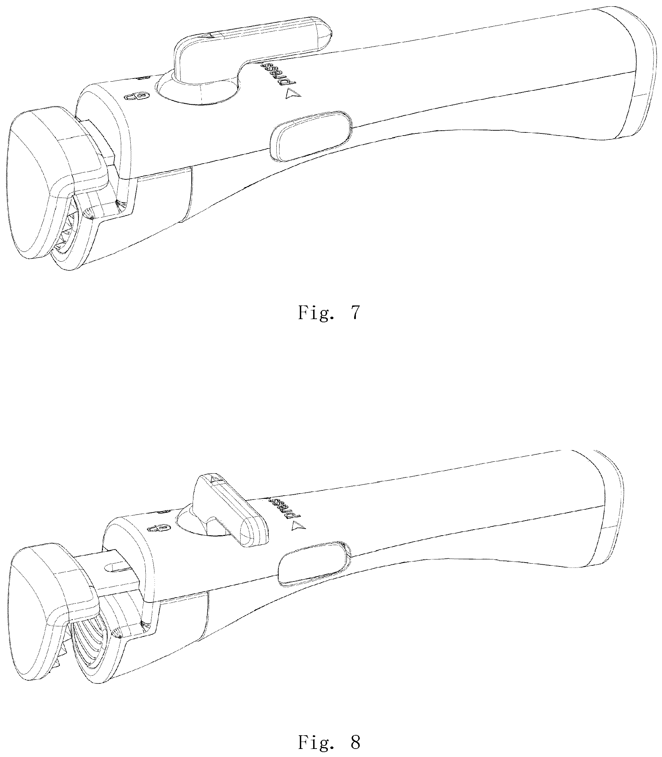

Figures 7 to 12 also show a structure of a safety lock, which uses a put-in locking structure to lock the clamping rake 4.

The safety lock has a locking bar 9, for example installed between the upper body 1 and the lower body 2 (e.g. via a pin 91). For example, a locking groove 10 is provided on the rake 4 (such as at the rear side of the rake 4). In the locked state, such as under the force of the spring 17, one end 92 of the locking bar 9 falls into the locking groove 10, so as to prevent the rake 4 from moving forward. By flipping or pressing down the other end 93 of the locking bar 9, the user can move the locking bar 9 out of the locking groove 10, so as to open the safety lock.

For example, there may be two locking bars 9 which are installed on two sides of the handle body. There may also be two corresponding locking grooves 10. A spring 17 such as a compressed spring 17 may be installed between the two locking bars 9.

The process from an opened state to a closed and locked state: rotating the handle 55, drives the rotating assembly 6 to rotate, and pushes the disk 7 and the rake 4 backwards. When the locking groove 10 moves backward to the position of the rear end 92 of the locking bar, the rear end 92 of the locking bar falls into the locking groove 10 under the force of the spring 17, so that the detachable handle is closed and locked, as shown in FIG. 10.

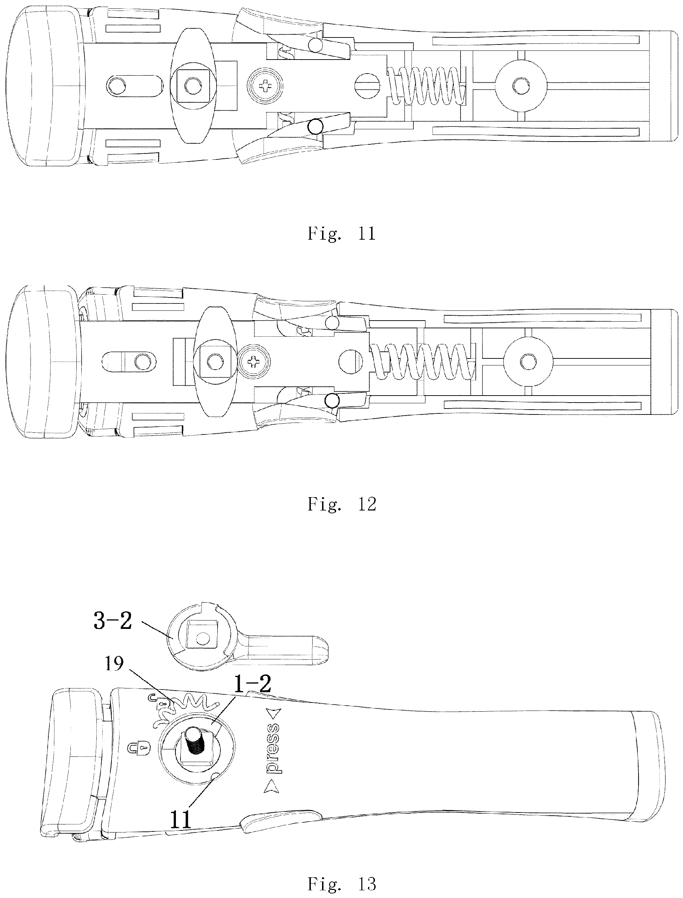

The process from a closed and locked state to a fully-opened state: firstly open the rotatable actuator, and secondly open the safety lock. Rotating the handle 55, drives the rotating assembly 6 to rotate, reaching a half-opened state as shown in FIG. 11. At this moment, under the force of the spring 42, the rake 4 has a tendency to move forward. However, because the rake 4 is interfered by the safety locking bar 9, the rake 4 stops moving and the detachable handle is in a half-opened state. After that, the user presses the safety locking bar 9 to move the locking bar 9 out of the locking groove 10, so that the rake 4 is released from interference of the locking bar 9, and under the force of the spring 42 the rake 4 will be fully opened.

In addition, as shown in FIG. 13, regarding the rotation of the rotatable actuator 5, a spring groove 3-2 may be provided on the lower surface of the actuator 5. Correspondingly, a spring groove 1-2 may be provided on the upper body 1 of the handle. When the rotatable actuator 5 is being rotated, a spring 19 moves in the groove. The existence of the spring in the rotatable actuator makes the rotatable actuator automatically move back to an original position, when there is no external force.

### Embodiment 3

On basis of the first embodiment or the second embodiment, the following may be preferably provided.

The left end of the clamping rake 4 and the left end of the lower body 2 of the handle are both designed to be recessed, with a concave surface facing to the left. When the handle is in a closed state, a left surface of the lower body 2 of the handle is in contact with the outer wall of the pot, and a right surface of the rake 4 is in contact with the inner wall of the pot. The recessed design is adapted to the shape of the pot, so that the detachable handle can hold the pot stably.

For example, the lower body 2 of the handle is fixed to the upper body 1 of the handle by screws, and the lower body 2 of the handle is also provided with a sheath 29 for encapsulating the screws connecting the upper and lower bodies of the handle. (see Fig. 2).

For example, the left end of the clamping rake 4 is also provided with a silicone sheath 43, and a side of the silicone sheath 43 for contacting the pot has a tooth-like shape, which can further improve the clamping stability. (see Fig. 2).

## Claims

1. A detachable handle, including: a main body (1,2) in which a passage (3) is longitudinally arranged, and a clamping rake (4) is arranged in the passage (3), and the clamping rake (4) is able to move longitudinally;
a rotatable actuator (5) is provided on the main body (1) of the handle, and a rotating subassembly (6) is located above the clamping rake (4) or on the clamping rake (4), and the rotating subassembly (6) is connected with the rotary actuator (5);
a disk (7) is provided on the clamping rake (4), and a movement of the disk (7) is linked with a movement of the rotating subassembly (6); under a rotation of the rotatable actuator (5), a movement of the disk (7) in a longitudinal direction is achieved, so as to bring the detachable handle into a closed state or into an opened state.

2. The handle according to claim 1, wherein a bottom of the rotating subassembly (6) has different radial lengths in two different directions.

3. The handle according to claim 2, wherein the rotating subassembly (6) has a stepped shape; preferably, a bottom step of the rotating subassembly (6) has an elliptical shape or an oval shape or an oval-like shape, having a long axis and a short axis; more preferably, a flat surface or a concave surface is provided at each of two ends of the long axis.

4. The handle according to any one of claims 1 to 3, wherein the disk (7) is mounted on the rake (4) by a fastener; in a process of closing the handle, a rotation of the rotating subassembly (6) pushes the disk (7) to move backwards, thereby driving the rake (4) to move backwards.

5. The handle according to claim 4, wherein the disk (7) is a rotating wheel with an inner ring and an outer ring; the inner ring does not rotate and is used for installing the fastener so as to be fixed on the rake (4); the outer ring is driven to rotate by a contact of the rotating subassembly (6).

6. The handle according to any one of claims 1 to 5, wherein a safety lock is provided, which uses a put-in locking structure to prevent the rake from moving forward, thereby preventing the handle from being opened.

7. The handle according to claim 6, wherein the safety lock comprises a locking bar (9) mounted on the main body, and a locking groove (10) is provided on the rake (4); when one end (92) of the locking bar (9) falls into the locking groove (10), the rake (4) is prevented from moving forward; by flipping or pressing the other end (93) of the locking bar (9), the locking bar (9) is moved out of the locking groove (10), so as to open the safety lock and to release the rake (4).

8. The handle according to any one of claims 1 to 7, wherein a lower surface of the rotatable actuator (5) is provided with a positioning groove (51), a upper side of the main body (1) of the handle is provided with a cavity for the rotatable actuator (5), and at least one positioning convex bulge (11) is provided in the cavity for the rotatable actuator (5); when the rotatable actuator (5) is being rotated, the positioning convex bulge (11) moves in the positioning groove (51).

9. The handle according to any one of claims 1 to 8, wherein a lower surface of the rotatable actuator (5) is provided with a spring groove (3-2), an upper side of the main body (1) of the handle is also provided with a corresponding spring groove (1-2), and a spring (19) is placed in the spring groove, wherein the spring (19) provides an elastic force for the rotatable actuator (5).

10. The handle according to any one of claims 1 to 9, wherein a left end of the clamping rake (4) and a left end of the main body of the handle are both designed to be recessed, so as to stably contact an inner wall or an outer wall of a pot.
